# EUROPÄISCHE PATENTANMELDUNG

(11) **EP 2 071 958 A1**
(43) Veröffentlichungstag der Anmeldung: **24.06.2009**
(21) Anmeldenummer: 08021363.0
(22) Anmeldetag: 09.12.2008
(51) Int. Cl.: A22C 11/02, A22C 11/10

(54) **Darmhalteeinrichtung mit Umlenkorgan**

(30) Priorität: 19.12.2007 DE 102007061120
(71) Anmelder: Heinrich Frey Maschinenbau GmbH, 89542 Herbrechtingen-Bolheim (DE)
(72) Erfinder: Frey, Heinrich, 89542 Herbrechtingen (DE)
(74) Vertreter: Manitz, Finsterwald & Partner GbR

(57) **Zusammenfassung**

Die vorliegende Erfindung betrifft eine Darmhalteeinrichtung für eine Maschine zum portionierenden Abfüllen von pastösen Produkten, insbesondere von Wurstbrät in Natur- und Kunstdärme, zu Würsten, mit einer Darmbremse, aus der die abgefüllten Würste austreten, wobei ferner ein Umlenkorgan vorgesehen ist, welches derart in Bezug auf die Darmbremse angeordnet ist, dass die aus der Darmbremse austretenden Würste mit dem Umlenkorgan in Anlage gelangen und dadurch eine Richtungsänderung erfahren.

## Beschreibung

Die vorliegende Erfindung betrifft eine Darmhalteeinrichtung für eine Maschine zum portionierenden Abfüllen von pastösen Produkten, insbesondere von Wurstbrät in Natur- und Kunstdärme, zu Würsten, welche eine Darmbremse aufweist, aus der die gefüllten Würste austreten.

Eine gemäß dem Oberbegriff des Anspruchs 1 ausgebildete Darmhalteeinrichtung wird beispielsweise in der EP 1 260 143 A1 beschrieben.

Eine Darmabdrehung zwischen den einzelnen Würsten kann beispielsweise hergestellt werden, indem die zuletzt gefüllte Wurst verdrehsicher festgehalten und der noch nicht befüllte Darm gegenüber der zuletzt hergestellten Wurst zur Bildung der Darmabdrehung verdreht wird. Zum Festhalten der zuletzt hergestellten Wurst können beispielsweise so genannte Muldenförderbänder zum Einsatz kommen, welche primär zum Abtransport der gefüllten und aus der Darmbremse austretenden Würste dienen und welche sich in Austrittsrichtung der Würste aus der Darmbremse in Fortsetzung derselben erstrecken. Vorzugsweise können dabei zwei Muldenförderbänder zum Einsatz kommen, welche übereinander angeordnet sind, so dass durch das Untertrum des oberen Förderers und das Obertrum des unteren Förderers ein Förderspalt definiert wird, in dem die zuletzt hergestellte Wurst während des Abdrehens festgehalten bzw. eingeklemmt und anschließend während der Bildung der nächsten Wurst abtransportiert werden kann.

Wenn mit Hilfe der Darmhalteeinrichtung sehr kurze Würste abgefüllt werden sollen, insbesondere Würste mit einer Länge von weniger als etwa 3 cm, ist der unvermeidbare Abstand zwischen dem Austritt der Würste aus der Darmbremse und dem Muldenförderband so groß, dass die Würste nicht zuverlässig an die Fördereinrichtung übergeben und von dieser verdrehsicher gehalten werden können.

Der Erfindung liegt daher die Aufgabe zu Grunde, auf zuverlässige Weise ein verdrehsicheres Halten auch relativ kurzer Würste zu ermöglichen.

Diese Aufgabe wird mit einer Darmhalteeinrichtung mit den Merkmalen des Anspruchs 1 und insbesondere dadurch gelöst, dass ferner ein Umlenkorgan vorgesehen ist, welches derart in Bezug auf die Darmbremse angeordnet ist, dass die aus der Darmbremse austretenden Würste mit dem Umlenkorgan in Anlage gelangen und dadurch eine Richtungsänderung erfahren.

Durch diese gezielt herbeigeführte Richtungsänderung kann eine aus der Darmbremse austretende Wurst so umgelenkt werden, dass sie z.B. gegen die Seitenflanken von Transportbändern eines der Darmhalteeinrichtung nachgeordneten Muldenförderbandes oder - allgemein - gegen eine andere Handhabungseinrichtung gedrückt und so zwischen dem Förderband bzw. der Handhabungseinrichtung und dem Umlenkorgan verdrehsicher gehalten wird. Das Umlenkorgan erfüllt dabei zwei Funktionen, indem es die Würste nicht nur umlenkt, sondern gleichzeitig als der eine Teil einer Halteeinrichtung dient, deren anderer Teil von der Handhabungseinrichtung gebildet wird.

Der Erfindung liegt somit die Erkenntnis zugrunde, dass sich die Produktübergabe von der Darmhalteeinrichtung bzw. deren Darmbremse an ein nachgeordnetes Muldenförderband oder eine andere Handhabungseinrichtung dadurch verbessern lässt, dass in den Weg des aus der Darmbremse austretenden Stromes gefüllter Würste ein Hindernis in Form des Umlenkorgans gestellt wird, das den Wurststrom bzw. die einzelnen Würste gezielt umlenkt, so dass die Würste früher mit der der Darmhalteeinrichtung nachgeordneten Handhabungseinrichtung in Eingriff gelangen und zwischen dieser und dem Umlenkorgan verdrehsicher gehalten werden.

Ein verdrehsicheres Halten von sehr kurzen Würsten wird durch die Erfindung überhaupt erst ermöglicht.

Weitere bevorzugte Ausführungsformen der erfindungsgemäßen Darmhalteeinrichtung ergeben sich aus den Unteransprüchen, der Beschreibung sowie den Zeichnungen.

So kann das Umlenkorgan gemäß einer Ausführungsform an einem Stützglied befestigt sein, welches die Darmbremse aufnimmt. Durch die Anbringung des Umlenkorgans an dem Stützglied besteht somit eine feste Zuordnung bzw. Relativposition zwischen dem Umlenkorgan und der Darmbremse.

Gemäß einer weiteren Ausführungsform kann es sich als vorteilhaft erweisen, das Umlenkorgan derart anzuordnen, z.B. an dem Stützglied zu befestigen, dass die relative Lage des Umlenkorgans in Bezug auf die Darmbremse einstellbar ist. Eine derartige Einstellbarkeit des Umlenkorgans kann beispielsweise dadurch erzielt werden, dass dieses verschiebbar an dem Stützglied befestigt ist. Hierdurch kann somit das Ausmaß der Umlenkung je nach Bedarf eingestellt werden.

Bei dem Umlenkorgan kann es sich insbesondere um ein passives Bauteil handeln, welches nach Art eines Fingers in den aus der Darmbremse austretenden Produktstrom hineinragt und diesen umlenkt.

Gemäß einer weiteren bevorzugten Ausführungsform kann das Umlenkorgan derart in Bezug auf die Darmbremse angeordnet sein, dass die aus der Darmbremse austretenden Würste eine Richtungsänderung in horizontaler Richtung erfahren.

Als vorteilhaft kann es sich ferner erweisen, wenn das Umlenkorgan eine zur Anlage mit den hergestellten Würsten geeignete Fläche aufweist, welche eine konkave Gestalt besitzt. Durch die konkave Gestalt der Anlagefläche wird eine sichere Führung für die Würste erreicht.

Gemäß einem weiteren Aspekt wird die der Erfindung zugrunde liegende Aufgabe durch eine Wurstfüllanlage gelöst, die eine erfindungsgemäße Darmhalteinrichtung sowie eine Handhabungseinrichtung, insbesondere einer Fördereinrichtung, für die austretenden Würste umfasst, wobei das Umlenkorgan derart angeordnet ist, dass die aus der Darmbremse austretenden Würste von dem Umlenkorgan gegen die Handhabungseinrichtung gelenkt und zwischen Umlenkorgan und Handhabungseinrichtung verdrehsicher gehalten werden.

Im Folgenden wird die Erfindung rein exemplarisch anhand einer beispielhaften Ausführungsform unter Bezugnahme auf die beigefügten Zeichnungen beschrieben, wobei
- Fig. 1: eine perspektivische Darstellung einer erfindungsgemäßen Darmhalteeinrichtung zeigt;
- Fig. 2: einen Vertikalschnitt durch zwei Muldenförderbänder zur Veranschaulichung der Wirkungsweise der erfindungsgemäßen Darmhalteeinrichtung zeigt;
- Fig. 3: eine Schnittdarstellung der Fig. 2 entlang der Schnittführung X-X zeigt.

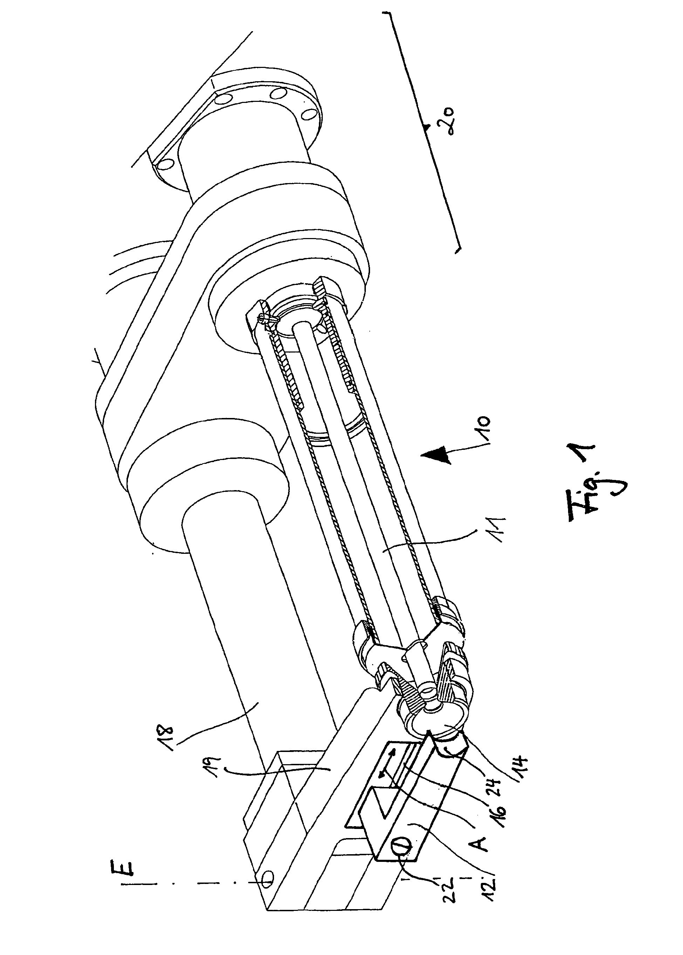

Die in der Fig. 1 dargestellte Darmhalteeinrichtung 10 entspricht mit Ausnahme des Umlenkorgans 12 im Wesentlichen der in der EP 1 260 143 A1 beschriebenen Darmhalteeinrichtung, weshalb bezüglich des Aufbaus der Darmhalteeinrichtung 10 sowie deren grundsätzlicher Funktions- und Arbeitsweise auf diese Schrift verwiesen wird. An dieser Stelle sei lediglich ausgeführt, dass die Darmhalteeinrichtung 10 eine Antriebsbaugruppe 20 aufweist, welche unter anderem dazu dient, das Füllrohr 11 zusammen mit dem aufgeschobenen, gerafften Darm (nicht dargestellt) in Drehung zu versetzen, um die erforderlichen Darmabdrehungen zu erzeugen.

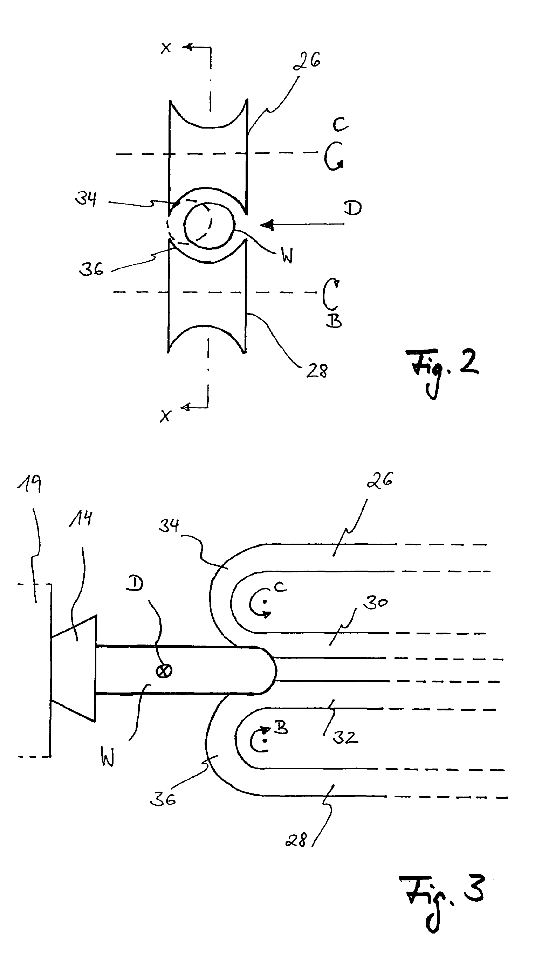

Zum Abtransport der so hergestellten und aus der Darmbremse 14 austretenden Würste W kann ein Paar Muldenförderer 26, 28 (siehe Fig. 2 und 3) zum Einsatz kommen, welche sich in Austrittsrichtung der Würste W aus der Darmbremse 14 in Fortsetzung derselben erstrecken und übereinander angeordnet sind, so dass das Untertrum 30 des oberen Muldenförderers 26 und das Obertrum 32 des unteren Muldenförderers 28 benachbart zueinander verlaufen, wie dies am besten der Fig. 3 entnommen werden kann. Wenn die hergestellten Würste W eine ausreichende Länge besitzen, gelangen sie mit ihrem vorderen Ende in den Spalt zwischen dem Untertrum 30 und dem Obertrum 32, so dass sie darin ausreichend fest eingeklemmt werden, um bei der durch Drehen des Füllrohrs 11 herbeigeführten Erzeugung einer Darmabdrehung verdrehsicher festgehalten zu werden.

Wenn jedoch die Wurstlänge verhältnismäßig klein ist, insbesondere weniger als 3 cm beträgt, kann dies dazu führen, dass die Würste W nicht in der gewünschten Weise von den Muldenförderern 26, 28 bzw. dem Untertrum 30 und dem Obertrum 32 festgehalten werden können, da die Würste W nicht in den Spalt zwischen dem Untertrum 30 und dem Obertrum 32 gelangen können.

Um diesem Problem zu begegnen, ist es erfindungsgemäß nun vorgesehen, den austretenden Würsten W ein Umlenkorgan 12 "in den Weg zu stellen", und zwar derart, dass die Würste W eine Richtungsänderung erfahren, wie dies in der Fig. 2 durch den Pfeil D dargestellt ist. Wie aus dieser Darstellung hervorgeht, werden die Würste W infolge der durch das Umlenkorgan 12 herbeigeführten Richtungsänderung mit ihren vorderen Enden an die seitlichen Flanken 34, 36 der Muldenförderbänder 26, 28 bzw. des Obertrums 32 und des Untertrums 30 gedrückt (gestrichelte Darstellung der Wurst W in Fig. 2), so dass sie zwischen den Muldenförderbändern 26, 28 und dem Umlenkorgan 12 mit ihrem vorderen Ende eingeklemmt sind.

Hierdurch werden die Würste W daran gehindert, sich infolge der Drehbewegung des Füllrohrs 11 zur Erzeugung der erwünschten Darmabdrehungen ebenfalls zu drehen.

Wie der Fig. 1 entnommen werden kann, weist die dargestellte Darmhalteeinrichtung 10 ein Stützglied 19 auf, welches um eine Achse E verschwenkbar an einem Auslegerarm 18 befestigt ist, der seinerseits mit der Antriebsbaugruppe 20 der Darmhalteeinrichtung 10 verbunden ist. An seinem frei auskragenden Ende weist das Stützglied 19 eine Ausnehmung auf, in der die Darmbremse 14 positioniert ist. Zusätzlich zu der Darmbremse 14 trägt das Stützglied 19 erfindungsgemäß das fingerartige Umlenkorgan 12, welches an dem Stützglied 19 befestigt ist. Bei Bedarf kann das Umlenkorgan 12 in Längsrichtung des Stützglieds 19 verschoben werden, wie dies in der Fig. 1 durch den Pfeil A angedeutet ist.

Um eine derartige Verschiebung zu ermöglichen, ist das Umlenkorgan 12 z.B. über eine Befestigungs- bzw. Verstellschraube 22 an dem Stützglied 19 befestigt, welche zur Durchführung des genannten Verschiebevorgangs des Umlenkorgans 12 gelöst werden kann. Nach dem Lösen der Verstellschraube 22 kann dann das Umlenkorgan 12 entlang einer Führungsschiene 16 verschoben werden, wodurch sich die relative Lage des Umlenkorgans in Bezug auf die Darmbremse 14 verändern lässt.

Dadurch, dass das Umlenkorgan 12 mit seiner Anlagefläche 24 in den Weg der aus der Darmbremse 14 austretenden Würste W hineinragt, gelangen die Würste W mit der Anlagefläche 24 des Umlenkorgans 12 in Eingriff, wodurch diese in der gewünschten Weise in horizontaler Richtung umgelenkt werden.

Wie der Fig. 1 ferner entnommen werden kann, weist die Anlagefläche 24 am frei auskragenden Ende des Umlenkorgans 12 eine konkave Gestalt auf, wodurch eine Führung bzw. Unterstützung für die aus der Darmbremse 14 austretenden Würste W erzielt wird.

### Bezugszeichenliste

- 10: Darmhalteeinrichtung
- 11: Füllrohr
- 12: Umlenkorgan/Finger
- 14: Darmbremse
- 16: Führungsschiene
- 18: Auslegerarm
- 19: Stützglied
- 20: Antriebsbaugruppe
- 22: Befestigungs-/Verstellschraube
- 24: konkave Anlagefläche von 12
- 26: oberes Muldenförderband
- 28: unteres Muldenförderband
- 30: Untertrum von 26
- 32: Obertrum von 28
- 34: Seitenflanke von 26, 30
- 36: Seitenflanke von 28, 32

- A: Verschieberichtung von 12
- B: Antriebsrichtung von 28
- C: Antriebsrichtung von 26
- D: Umlenkrichtung von 12
- E: Achse
- W: Wurst

## Patentansprüche

1. Darmhalteeinrichtung (10) für eine Maschine zum portionierenden Abfüllen von pastösen Produkten, insbesondere von Wurstbrät in Natur- und Kunstdärme, zu Würsten (W), mit einer Darmbremse (14), aus der die abgefüllten Würste (W) austreten,
**dadurchgekennzeichnet, dass**
ferner ein Umlenkorgan (12) vorgesehen ist, welches derart in Bezug auf die Darmbremse (14) angeordnet ist, dass die aus der Darmbremse (14) austretenden Würste (W) mit dem Umlenkorgan (12) in Anlage gelangen und **dadurch** eine Richtungsänderung erfahren.

2. Darmhalteeinrichtung nach Anspruch 1,
**dadurchgekennzeichnet,dass**
ferner ein die Darmbremse (14) aufnehmendes Stützglied (19) vorgesehen ist, an dem zusätzlich das Umlenkorgan (12) befestigt ist.

3. Darmhalteeinrichtung nach Anspruch 1 oder 2,
**dadurch gekennzeichnet, dass**
die Lage des Umlenkorgans (12) in Bezug auf die Darmbremse (14) einstellbar ist.

4. Darmhalteeinrichtung nach zumindest einem der vorstehenden Ansprüche,
**dadurchgekennzeichnet, dass**
das Umlenkorgan (12) verschiebbar angeordnet ist.

5. Darmhalteeinrichtung nach zumindest einem der vorstehenden Ansprüche,
**dadurchgekennzeichnet, dass**
das Umlenkorgan (12) als in den durch die Darmbremse (14) bestimmten Weg der austretenden Würste (W) hinein ragender starrer Finger ausgebildet ist.

6. Darmhalteeinrichtung nach zumindest einem der vorstehenden Ansprüche,
**dadurchgekennzeichnet, dass**
das Umlenkorgan (12) derart in Bezug auf die Darmbremse (14) angeordnet ist, dass die aus der Darmbremse (14) austretenden Würste (W) eine Richtungsänderung in horizontaler Richtung erfahren.

7. Darmhalteeinrichtung nach zumindest einem der vorstehenden Ansprüche,
**dadurchgekennzeichnet, dass**
das Umlenkorgan (12) eine Anlagefläche (24) für die Würste (W) mit einer konkaven Gestalt aufweist.

8. Wurstfüllanlage mit einer Darmhalteinrichtung (10) nach zumindest einem der vorstehenden Ansprüche und einer Handhabungseinrichtung (26, 28), insbesondere einer Fördereinrichtung, für die austretenden Würste (W), wobei das Umlenkorgan (12) derart angeordnet ist, dass die aus der Darmbremse (14) austretenden Würste (W) von dem Umlenkorgan (12) gegen die Handhabungseinrichtung (26, 28) gelenkt und zwischen Umlenkorgan (12) und Handhabungseinrichtung (26, 28) verdrehsicher gehalten werden.

9. Wurstfüllanlage nach Anspruch 8,
**dadurchgekennzeichnet, dass**
die Handhabungseinrichtung ein Muldenförderband (26, 28) umfasst und die austretenden Würste (W) gegen ein Fördertrum (30, 32) des Muldenförderbands (26, 28) gelenkt werden.

10. Wurstfüllanlage nach Anspruch 8 oder 9,
**dadurchgekennzeichnet, dass**
das Umlenkorgan (12) in einem Zwischenraum zwischen der Darmbremse (14) und der Handhabungseinrichtung (26, 28) wirksam ist.
